# EUROPEAN PATENT APPLICATION

(11) **EP 4 741 126 A1**
(43) Date of publication of application: **13.05.2026**
(21) Application number: 25189648.6
(22) Date of filing: 15.07.2025
(51) Int. Cl.: B26D 7/02, B23D 33/02, B26D 7/04, B26D 1/02, B26D 1/06, B26D 7/01, B26D 1/00

(54) **ELECTRODE PLATE CUTTING MACHINE FOR SECONDARY BATTERY AND SECONDARY BATTERY MANUFACTURING APPARATUS HAVING ELECTRODE PLATE CUTTING MACHINE**

(30) Priority: 06.11.2024 KR 20240156593
(71) Applicant: SAMSUNG SDI CO., LTD., Yongin-si, Gyeonggi-do 17084 (KR)
(72) Inventor: KWON, Junhwan, 17084 Yongin-si (KR); KIM, Jinhwan, 17084 Yongin-si (KR); IM, Jongmin, 17084 Yongin-si (KR); KANG, Bonggeun, 17084 Yongin-si (KR)
(74) Representative: Marks & Clerk LLP

(57) **Abstract**

An electrode plate cutting machine includes an upper cutting unit having an upper cutter installed above a transport path of an electrode plate transported along the transport path, and an upper stripper disposed at a side portion of the upper cutter to press the electrode plate downwardly and support the electrode plate when cutting the electrode plate, and a lower cutting unit having a lower cutter installed below the upper cutting unit with the electrode plate interposed therebetween to cut the electrode plate through cross movement with the upper cutter, and a lower stripper positioned at a side portion of the lower cutter to support the electrode plate upwardly toward the upper cutter when cutting the electrode plate.

## Description

### FIELD

The present disclosure relates to an electrode plate cutting machine for cutting an electrode plate during a process of manufacturing a secondary battery and a secondary battery manufacturing apparatus having the electrode plate cutting machine.

### BACKGROUND

Secondary batteries are batteries that can be charged and discharged, unlike primary batteries that cannot be recharged. In general, a secondary battery includes an electrode assembly composed of positive and negative electrode plates (hereinafter referred to as "electrode plates") and a separator. The electrode plate may be manufactured through coating, rolling, slitting, and notching processes.

An electrode plate cutting machine may be used during a process of manufacturing an electrode plate. The electrode plate cutting machine includes upper and lower cutters installed on upper and lower portions of the electrode plate, respectively, which is transported along a transport path. The upper and lower cutters cut the electrode plate positioned between the upper and lower cutters through cross movement.

However, the conventional electrode plate cutting machine has a problem that an electrode plate moves slightly when cutting the electrode plate. In addition, the movement of the electrode plate causes deintercalation of an active material from an electrode plate substrate while the electrode plate is cut. Accordingly, the conventional electrode plate cutting machine additionally requires a suction device, a foreign substance collecting process, or the like for removing foreign substances.

The herein information disclosed in this Background section is for enhancement of understanding of the background of the present disclosure, and therefore, it may contain information that does not constitute a related (or prior) art.

### SUMMARY

The present disclosure is directed to providing an electrode plate cutting machine for a secondary battery and a secondary battery manufacturing apparatus having the electrode plate cutting machine, in which deintercalation of an active material from a substrate is prevented while cutting by suppressing movement of an electrode plate while the electrode plate is cut.

According to an aspect of the present disclosure, there is provided an electrode plate cutting machine for a secondary battery, which includes an upper cutting unit having an upper cutter installed above a transport path of an electrode plate transported along the transport path, and an upper stripper disposed at a side portion of the upper cutter to press the electrode plate downwardly and support the electrode plate when cutting the electrode plate, and a lower cutting unit having a lower cutter installed below the upper cutting unit with the electrode plate interposed therebetween to cut the electrode plate through cross movement with the upper cutter, and a lower stripper positioned at a side portion of the lower cutter to support the electrode plate upwardly toward the upper cutter when cutting the electrode plate.

The upper cutting unit may further comprise a support body configured to fix the upper cutter, and may comprise an elastic supporter provided on the support body, the elastic supporter configured to elastically support the upper stripper downwardly.

The lower cutting unit may further comprise a support body configured to support the lower cutter, and may comprise an elastic supporter disposed on the support body of the lower cutting unit, the elastic supporter of the lower cutting unit configured to elastically support the lower stripper upwardly.

A stripper guide may be installed on the support body of the lower cutting unit, the stripper guide configured to support the lower stripper so as to prevent the lower stripper from moving laterally when cutting the electrode plate.

The lower cutter may be insertion-coupled to the support body of the lower cutting unit and may be replaceable.

A horizontal surface portion may be formed on an upper surface of the lower cutter, and the horizontal surface portion may be configured to be in surface contact with the electrode plate when cutting the electrode plate.

The lower cutter may comprise a lower cutter body, and a blade tip coupled to the lower cutter body so as to apply a shear force to the electrode plate.

A friction plate may be mounted on an upper surface of the lower stripper, and the friction plate may be configured to be in contact with a lower surface of the electrode plate.

A stripper guide for supporting the upper stripper may be provided on the support body of the upper cutting unit, and the stripper guide for supporting the upper stripper may be configured to prevent the upper stripper from moving laterally when cutting the electrode plate.

A friction plate may be mounted on a lower surface of the upper stripper, and the friction plate mounted on the lower surface of the upper stripper may be configured to be in contact with the electrode plate.

According to another aspect of the present disclosure, there is provided a secondary battery manufacturing apparatus including a plurality of transport rollers configured to transport an electrode plate, which is a processing target, along a transport path, a winding roll configured to wind the electrode plate that has passed the transport roller, a motor configured to rotate the winding roll, an electrode plate cutting machine including an upper cutting unit having an upper cutter installed above the transport path of the electrode plate transported along the transport path, and an upper stripper disposed at a side portion of the upper cutter to press the electrode plate downwardly and support the electrode plate when cutting the electrode plate, and a lower cutting unit having a lower cutter installed below the upper cutting unit with the electrode plate interposed therebetween to cut the electrode plate through cross movement with the upper cutter, and a lower stripper positioned at a side portion of the lower cutter to support the electrode plate upwardly toward the upper cutter when cutting the electrode plate, and a driving unit configured to move the upper cutting unit upwardly and downwardly.

The upper cutting unit may further comprise a support body configured to fix the upper cutter, and may comprise an elastic supporter provided on the support body, the elastic supporter configured to elastically support the upper stripper downwardly.

The lower cutting unit may further comprise a support body configured to support the lower cutter, and may comprise an elastic supporter disposed on the support body of the lower cutting unit, the elastic supporter of the lower cutting unit configured to elastically support the lower stripper upwardly.

A stripper guide may be installed on the support body of the lower cutting unit, the stripper guide configured to support the lower stripper so as to prevent the lower stripper from moving laterally when cutting the electrode plate.

The lower cutter may be insertion-coupled to the support body of the lower cutting unit and may be replaceable.

A horizontal surface portion may be formed on an upper surface of the lower cutter, and the horizontal surface portion may be configured to be in surface contact with the electrode plate when cutting the electrode plate.

The lower cutter may comprise a lower cutter body, and a blade tip coupled to the lower cutter body so as to apply a shear force to the electrode plate.

A friction plate may be mounted on an upper surface of the lower stripper, and the friction plate may be configured to be in contact with a lower surface of the electrode plate.

A stripper guide for supporting the upper stripper may be provided on the support body of the upper cutting unit, and the stripper guide for supporting the upper stripper may be configured to prevent the upper stripper from moving laterally when cutting the electrode plate.

A friction plate may be mounted on a lower surface of the upper stripper, and the friction plate mounted on the lower surface of the upper stripper may be configured to be in contact with the electrode plate.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The herein and other objects, features and advantages of the present disclosure will become more apparent to those of ordinary skill in the art by describing example embodiments thereof in detail with reference to the accompanying drawings, in which:
FIG. 1 is a schematic view illustrating an electrode assembly of a secondary battery manufactured using an electrode plate cutting machine according to some embodiments of the present disclosure;
FIG. 2 is a view illustrating an interior of a pouch-type battery to which the electrode assembly of FIG. 1 is applied;
FIG. 3 is a cross-sectional view illustrating a cylindrical battery manufactured through a secondary battery manufacturing apparatus according to some embodiments of the present disclosure;
FIG. 4 is a perspective view illustrating an exterior of a prismatic battery manufactured through the secondary battery manufacturing apparatus according to some embodiments of the present disclosure;
FIG. 5 is a cross-sectional view along line A-A in FIG. 4;
FIGS. 6 to 8 are views for describing a configuration and operation method of a secondary battery manufacturing apparatus having an electrode plate cutting machine according to some embodiments of the present disclosure;
FIG. 9 is a view illustrating another example of a lower cutting unit of the electrode plate cutting machine according to some embodiments of the present disclosure;
FIG. 10 is a view illustrating still another example of the lower cutting unit of the electrode plate cutting machine according to some embodiments of the present disclosure;
FIGS. 11 to 14 are views illustrating various types of lower cutters applicable to the electrode plate cutting machine according to some embodiments of the present disclosure;
FIGS. 15 and 16 are views illustrating another example of an upper stripper applicable to the electrode plate cutting machine according to embodiments of the present disclosure; and
FIGS. 17 and 18 are views illustrating another example of a lower stripper applicable to the electrode plate cutting machine according to some embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

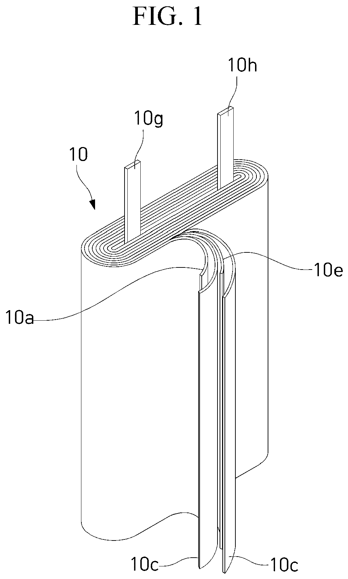

FIG. 1 is a schematic view illustrating an electrode assembly of a secondary battery which may be manufactured through an apparatus for manufacturing a secondary battery according to embodiments of the present disclosure.

An electrode assembly 10 may be formed by winding or stacking a first electrode plate 10a, a separator 10c, and a second electrode plate 10e, each of which are formed as thin plates or films.

In other embodiments, the electrode assembly 10 may be a stack type rather than a winding type, and the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack.

In addition, one or more electrode assemblies may be stacked (e.g., arranged) such that long sides of the electrode assemblies are adjacent to each other and accommodated in a case, and the number of electrode assemblies in a case is not limited in the present disclosure. The first electrode plate 10a of the electrode assembly 10 may act as a negative electrode, and the second electrode plate 10e may act as a positive electrode. Of course, the reverse is also possible.

The first electrode plate 10a may be formed by applying (e.g., coating or depositing) a first electrode active material, such as graphite or carbon, onto a first electrode substrate formed of a metal foil, such as copper, a copper alloy, nickel, or a nickel alloy. The first electrode plate 10a may include a first electrode tab 10g (e.g., a first uncoated portion), which is a region to which the first electrode active material is not applied. The first electrode tab 10g may be connected to an external first terminal. In some embodiments, when the first electrode plate 10a is manufactured, the first electrode tab 10g may be formed by being cut in advance to protrude to (or protrude from) one side of the electrode assembly 10, or the first electrode tab 10g may protrude to one side of the electrode assembly 10 more than (e.g., farther than or beyond) the separator 10c without being separately cut.

The second electrode plate 10e may be formed by applying (e.g., coating or depositing) a second electrode active material, such as a transition metal oxide, onto a second electrode substrate formed of a metal foil, such as aluminum or an aluminum alloy. The second electrode plate 10e may include a second electrode tab 10h (e.g., a second uncoated portion), which is a region to which the second electrode active material is not applied. The second electrode tab 10h may be connected to an external second terminal. In some embodiments, the second electrode tab 10h may be formed by being cut in advance to protrude to a side or the other side (e.g., the opposite side) of the electrode assembly 10 when the second electrode plate 10e is manufactured, or the second electrode plate 10e may protrude to a side or the other side of the electrode assembly more than (e.g., farther than or beyond) the separator 10c without being separately cut.

The separator 10c prevents a short-circuit between the first electrode plate 10a and the second electrode plate 10e while allowing movement of lithium ions therebetween. The separator 10c may be made of, for example, a polyethylene film, a polypropylene film, a polyethylene-polypropylene film, or the like.

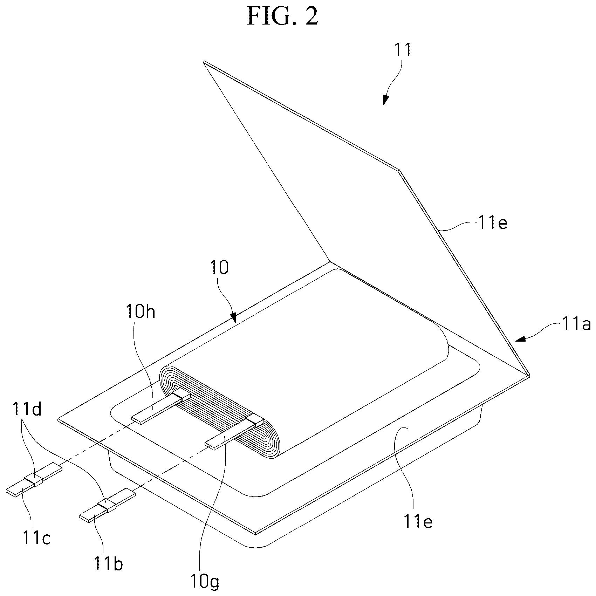

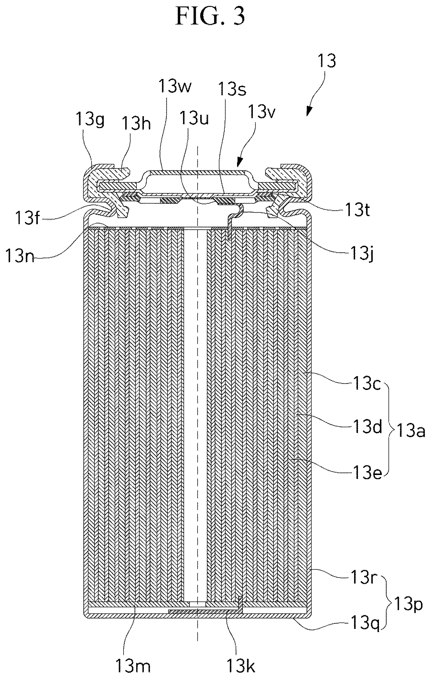

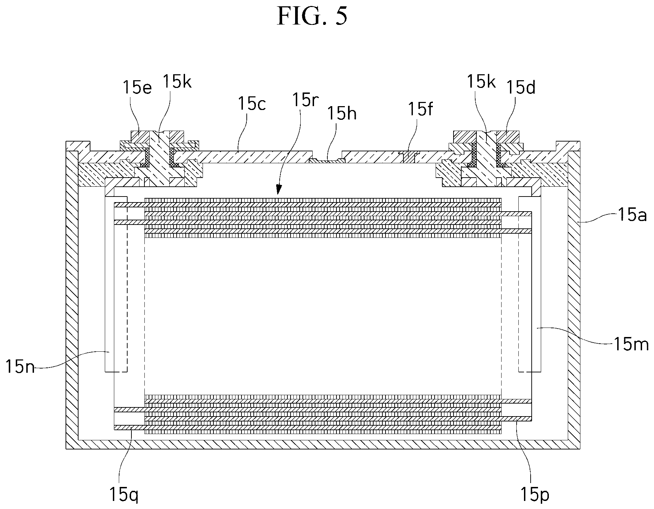

In some embodiments, the electrode assembly 10 may be accommodated in a case along with an electrolyte. In a pouch-type secondary battery, an electrode assembly 10 may be accommodated in a pouch made of flexible material (see, e.g., FIG. 2). In a cylindrical or prismatic secondary battery, an electrode assembly 10 may be accommodated in a cylindrical or prismatic metal casing (see, e.g., FIGS. 3 and 5).

A description is given of materials that can be used for the electrode plate of the herein electrode assembly.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the herein formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x ≤ 2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particles and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

FIG. 2 is a view illustrating an interior of a pouch-type battery to which the electrode assembly 10 of FIG. 1 is applied.

The pouch-type secondary battery includes an electrode assembly 10 and a pouch 11a that accommodates the electrode assembly 10.

The electrode assembly 10 is the same as that illustrated in FIG. 1. The first electrode tab 11g and the second electrode tab 11h of the electrode assembly 10 may be electrically connected to respective external first and second terminal leads 11b and 11c by welding. Each of the first terminal lead 11b and the second terminal lead 11c may be attached with a tab film 11d for insulation from the pouch 11a.

The pouch 11a may be sealed by having sealing parts 1le at the edges thereof come into contact with each other with accommodating the electrode assembly 10 therein, in which case the sealing may be achieved with the tab film 11d interposed between the sealing parts 11e. The sealing parts 11e of the pouch 11a may each be made of a thermal fusion material that generally has weak adhesion to metal. Thus, it may be fused to the pouch 11a by interposing the thin tab film 11d between the sealing parts 11e.

FIG. 3 is a cross-sectional view illustrating a cylindrical battery manufactured through the apparatus 20 for manufacturing a secondary battery according to embodiments of the present disclosure.

The cylindrical battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case 13p.

The electrode assembly 13a may include a separator 13d and a first electrode 13c and a second electrode 13e positioned with the separator 13d interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case 13p. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. **In** such an embodiment, the second substrate may be made of, for example, a copper foil or a nickel foil, and the second active material layer may include graphite, for example.

The separator 13d prevents a short circuit between the first electrode 13c and the second electrode 13e while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f (e.g., a bead) deformed inwardly may be formed in the body portion 13r, and a crimping part 13g (e.g., a crimp) bent inwardly may be formed at an open end of the body portion 13r.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the cap assembly 13v against the gasket 13h. The case 13p may be formed of steel plated with nickel, for example.

The cap assembly 13v may be fixed to the inside of the crimping part 13g by the gasket 13h to seal the case 13p. The cap assembly 13v may include a cap up 13w, a safety vent 13s, a cap down 13t, an insulating member, and a subplate 13u, but is not limited to these examples and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent 13s around the protrusion part.

When gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a, may be fixed to the sub plate 13u. Accordingly, the cap up 13w, the safety vent 13s, the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode 13c by the first lead tab 13j, may face the electrode assembly 13a with the insulating plate 13n interposed therebetween and may maintain a state of being insulated (e.g., electrically insulated) from the electrode assembly 13a by the insulating plate 13n. Meanwhile, another insulating plate 13m may be included for insulation between the electrode assembly 13a and the bottom portion 13q of the case 13p.

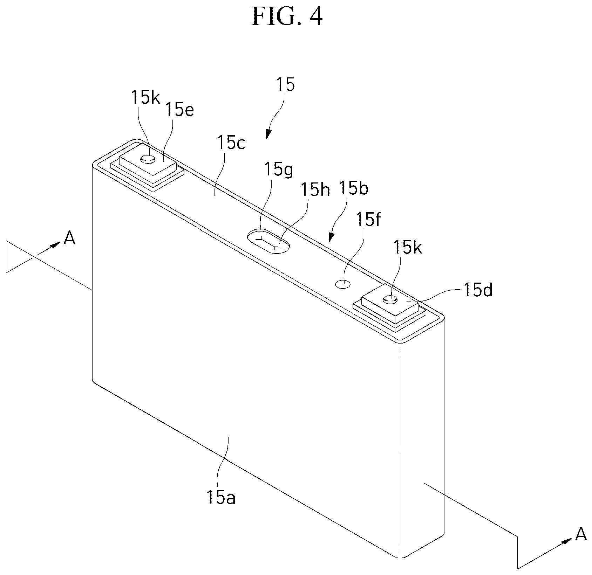

FIG. 4 is a perspective view illustrating an exterior of a prismatic battery which may be manufactured through the apparatus for manufacturing a secondary battery according to embodiments of the present disclosure.

A case 15a forms the overall appearance of a prismatic battery and may be formed of a conductive metal such as aluminum, aluminum alloy, or nickel-plated steel. In addition, the case 15a may provide a space for accommodating an electrode assembly therein.

A cap assembly 15b may include a cap plate 15c that covers the opening of the case 15a. In some examples, the case 15a and the cap plate 15c may be made of a conductive material. Here, a first terminal 15d and a second terminal 15e may be electrically connected to respective positive and negative (or negative and positive) electrodes inside the case, and may be installed to protrude outward through the cap plate 15c.

An electrolyte inlet 15f may be formed in the cap plate 15c, a gas discharge hole 15g may be opened, and a vent, i.e., a gas discharge device 15h may be connected to the gas discharge hole 15g. The gas discharge device 15h is opened by gas generated inside the battery and performs a degassing function.

FIG. 5 is a cross-sectional view along line A-A in FIG. 4.

An electrode assembly 15r may be formed by winding or stacking a first electrode plate, a separator, and a second electrode plate. When the electrode assembly 15r is a wound type, a winding axis may be parallel to the longitudinal direction of the case 15a. In some other embodiments, the electrode assembly 15r is a stack type rather than a winding type. The shape of the electrode assembly 15r is not limited in the present disclosure.

In addition, the electrode assembly 15r may be a Z-stack electrode assembly in which a positive electrode plate and a negative electrode plate are inserted into both sides of a separator, which is then bent into a Z-stack. In addition, one or more electrode assemblies 15r may be stacked such that long sides of the electrode assemblies are adjacent to each other and accommodated in the case, and the number of electrode assemblies in the case is not limited in the present disclosure. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In FIG. 5, the first electrode tab 15p and the second electrode tab 15q are illustrated as being positioned on the right side and the left side of the electrode assembly 15r, respectively. However, in some other embodiments, both the first electrode tab 15p and the second electrode tab 15q may be positioned together on the right side or the left side of the electrode assembly 15r.

Here, the left side and the right side of the electrode assembly 15r are based on the battery illustrated in FIG. 5 for convenience of explanation. The left side refers to the side of the vertical surface of the electrode assembly 15r to which the second current collector 15n is joined, and the right side refers to the opposite side to which the first current collector 15m is joined. Therefore, the terms "left side" and "right side" of the electrode assembly 15r used herein may vary when the battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, an electrode assembly 15r is accommodated in the case 15a along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

As illustrated in FIG. 5, the first current collector 15m and the second current collector 15n are connected to the first terminal 15d and the second terminal 15e through connection members 15k, respectively. In some embodiments, the connection members 15k may each have an outer peripheral surface that is threaded, and may be fastened to the first terminal 15d and the second terminal 15e by screwing. However, the present disclosure is not limited thereto. For example, the connection members 15k may also be coupled to the first terminal 15d and the second terminal 15e by riveting or welding.

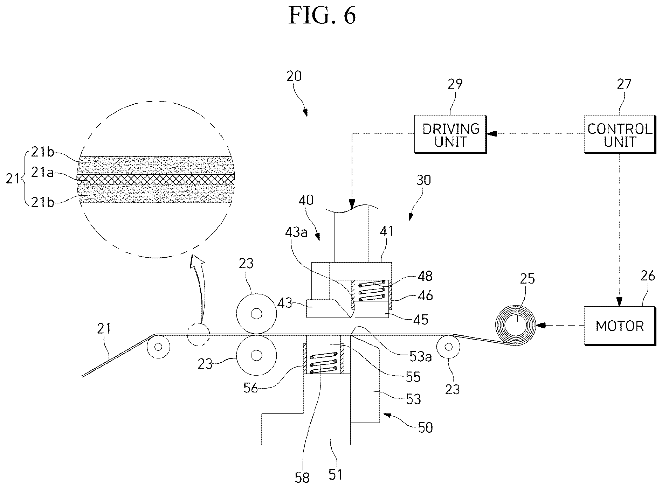

FIGS. 6 to 8 are views for describing a configuration and operation method of a secondary battery manufacturing apparatus 20 having an electrode plate cutting machine according to some embodiments of the present disclosure.

The secondary battery manufacturing apparatus 20 may cut an electrode plate 21 moving along a predetermined transport path and prevent deintercalation of an active material from a substrate by suppressing movement of the electrode plate 21 while cutting. "Movement of the electrode plate" may be movement of the electrode plate due to pressures of upper and lower cutters, which are applied to the electrode plate at the moment of cutting the electrode plate. As a result, the secondary battery manufacturing apparatus 20 according to the present embodiment is for preventing movement of the electrode plate by fixing the electrode plate at the moment of cutting the electrode plate 21.

As illustrated, the secondary battery manufacturing apparatus 20 according to the present embodiment may include a plurality of transport rollers 23, a winding roll 25, a motor 26, a cutting machine 30, a driving unit 29, and a control unit 27.

The transport roller 23 may transport the electrode plate 21, which is a processing target , along the predetermined transport path. Some of the plurality of transport rollers 23 may provide a driving force for transporting the electrode plate. In addition, the remaining transport rollers may serve as support rolls that tightly support the electrode plate 21 transported by the transport rollers.

The electrode plate 21 is a stack formed of a substrate 21a and a mixture 21b. The mixture 21b is an active material stacked on both surfaces of the substrate 21a.

The winding roll 25 may wind the electrode plate 21 that has passed the transport roller 23. The winding roll 25 may be rotated by a rotational force received from the motor 26. The electrode plate 21 wound around the winding roll 25 may be taken out from the winding roll 25 by an operator and move to a subsequent process.

The winding roll 25 may be operated by the motor 26. The motor 26 may be operated by a control signal of the control unit 27 to rotate or not rotate the winding roll 25. The control unit 27 may control the on/off and rotational speed of the motor 26.

Meanwhile, the cutting machine 30 may cut the electrode plate 21 transported along the electrode plate 21 transported by the transport roller 23. The winding roll 25 is rotated and not rotated repeatedly so that the cutting machine 30 cuts the electrode plate.

The cutting machine 30 may include an upper cutting unit 40 and a lower cutting unit 50. The upper cutting unit 40 and the lower cutting unit 50 may be disposed at opposite sides with the electrode plate 21 interposed therebetween. The upper cutting unit 40 may be positioned above the electrode plate 21, and the lower cutting unit 50 may be positioned below electrode plate 21.

The upper cutting unit 40 may include an upper cutter 43, an upper stripper 45, a stripper guide 46, a support body 41, and an elastic supporter.

The upper cutter 43 is a blade installed above the transport path of the electrode plate 21 transported along the transport path and may have a blade 43a on an end portion thereof. The blade 43a is a sharp blade formed to cut the electrode plate 21.

The upper cutter 43 may be mounted on a lower portion of the support body 41. According to an embodiment, the upper cutter 43 may be formed to be detachably attached to the support body 41.

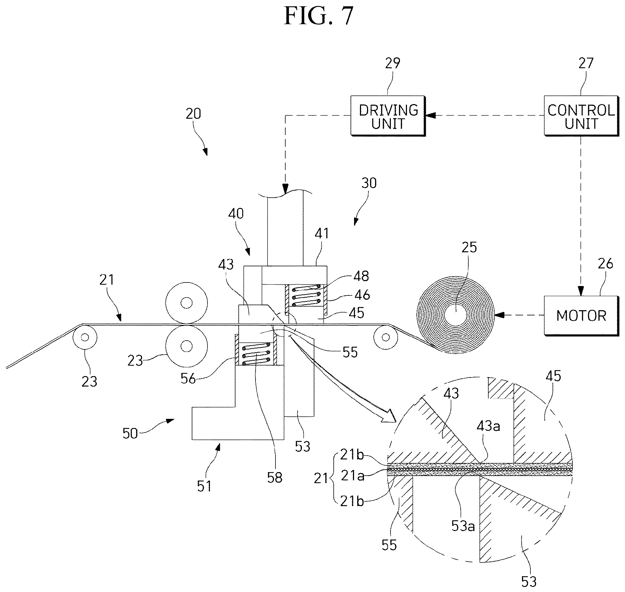

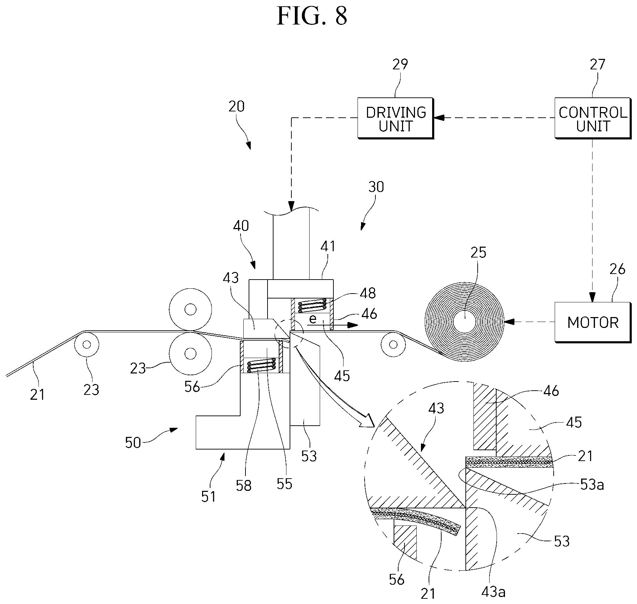

The support body 41 is a structure that supports the upper cutter 43, the upper stripper 45, the stripper guide 46, and the elastic supporter and may be moved upwardly and downwardly by the driving unit 29. As illustrated in FIGS. 7 and 8, the upper cutter 43 may be moved downwardly by the driving unit 29 to cut the electrode plate 21. In addition, the upper cutter 43 may complete cutting and then move upwardly to an original position thereof. The operation of the driving unit 29 may also be controlled by the control unit 27.

The upper stripper 45 is a member installed at a side portion of the upper cutter 43 and may press the electrode plate downwardly and support the electrode plate when cutting the electrode plate. An upper surface of the electrode plate 21 and a lower surface of the upper stripper 45 may be in close surface contact with each other.

The upper stripper 45 is connected to a spring 48 and elastically supported downwardly by the spring 48. The spring 48 may be an elastic supporter that elastically supports the upper stripper 45 downwardly. An upper end portion of the spring 48 may be fixed to the support body 41, and a lower end portion thereof may be fixed to the upper stripper 45. The upper stripper 45 may maintain a state of being mounted on the lower portion of the support body 41 by the spring 48. The spring 48 may be compressed when the upper stripper 45 presses the electrode plate 21. In addition, the spring 48 may expand and be elastically restored when the upper cutting unit 40 moves upwardly.

The stripper guide 46 may support the upper stripper 45 to move vertically and prevent the upper stripper 45 from moving laterally (e.g., moving in a direction parallel to a transport direction of the electrode plate 21) when cutting the electrode plate. That is, the stripper guide 46 prevents the upper stripper 45 from moving in a direction of arrow e of FIG. 8 or a direction opposite thereto. By adopting the stripper guide 46, it is possible to more stably prevent the movement of the electrode plate 21 while cutting.

The lower cutting unit 50 may be disposed to correspond to a lower portion of the upper cutting unit 40 with the electrode plate 21 interposed therebetween. The lower cutting unit 50 includes a support body 51, a lower cutter 53, a lower stripper 55, a stripper guide 56, and an elastic supporter.

The support body 51 is a structure that supports the lower cutter 53, the lower stripper 55, the stripper guide 56, and the elastic supporter. In the present embodiment, the support body 51 may be fixed below a movement path of the electrode plate 21. In another embodiment, the support body 51 may also be formed to move upwardly and downwardly.

The lower cutter 53 may be mounted on a side portion of the support body 51 and have a blade 53a on an upper end portion thereof. The lower cutter 53 may be below the upper cutting unit with the electrode plate interposed therebetween. The lower cutter 53 may cut the electrode plate 21 through cross movement with the upper cutter 43. A virtual straight line connecting the blade 43a of the upper cutter 43 to the blade 53a of the lower cutter 53 may be orthogonal to the electrode plate 21.

The lower stripper 55 may be supported by the ellastic support. When cutting the electrode plate 21, the lower stripper 55 may be in close contact with the lower surface of the electrode plate 21 by the elastic support and suppress the movement of the electrode plate 21. That is, the lower stripper 55 may be positioned at a side portion of the lower cutter and support the electrode plate upwardly toward the upper cutter when cutting the electrode plate.

The elastic supporter is a spring 58 that elastically supports the lower stripper 55 upwardly. The spring 58 supports the lower stripper 55 while being fixed to an upper surface of the support body 51. When cutting the electrode plate, the lower stripper 55 may be moved vertically by a reaction force transmitted from the electrode plate and an elastic force of the spring 58.

The stripper guide 56 may be fixed to an upper portion of the support body 51 and support the lower stripper 55 to move upwardly and downwardly. The lower stripper 55 may move vertically while being supported by the stripper guide 56.

The stripper guide 56 may serve to support the lower stripper 55 and prevent the lower stripper 55 from moving laterally when cutting the electrode plate. That is, the stripper guide 56 prevents the lower stripper 55 in close contact with the lower surface of the electrode plate 21 from moving laterally, thereby preventing the electrode plate from moving when cutting.

FIGS. 6 to 8 are views for describing a configuration and operation method of an apparatus for manufacturing a secondary battery manufacturing apparatus having an electrode plate cutting machine according to some embodiments of the present disclosure.

FIG. 6 is a view illustrating the electrode plate 21 that is not cut yet. As illustrated in FIG. 6, the upper cutting unit 40 is waiting above the electrode plate 21. In the waiting state, the winding roll 25 may rotate to wind the electrode plate 21.

When a cutting position of the electrode plate 21 is positioned vertically below the blade 43a of the upper cutter 43, the rotation of the winding roll 25 may stop and the upper cutting unit 40 may move downwardly.

As the upper cutting unit 40 moves downwardly, the upper cutter 43 may press the electrode plate 21 downwardly. Accordingly, the lower surface of the electrode plate 21 may be in close contact with the lower stripper 55. The electrode plate 21 is fixed in a compressed state between the upper cutter 43 and the lower stripper 55. In addition, in this case, the blade 53a of an upper end of the lower cutter 53 is in line contact with a cutting point of the electrode plate 21, and the upper stripper 45 is in close contact with the upper surface of the electrode plate 21 (see FIG. 7).

In such a state, when the upper cutting unit 40 further moves downwardly using the driving unit 29, the blade 43a of the upper cutter 43 may intersect the blade 53a of the lower cutter 53 to cut the electrode plate 21. FIG. 8 illustrates a cut state of the electrode plate 21.

After the cutting of the electrode plate is completed, the upper cutting unit 40 moves upwardly, and the winding roll 25 is rotated to completely wind the electrode plate 21 and then take the electrode plate 21 out. In addition, after a front end portion of the remaining electrode plate 21 is reconnected to the empty winding roll 25, the herein process is repeated.

Meanwhile, the lower cutter 53 may be insertion-coupled to the support body 51 and replaced. When the blade of the lower cutter 53 becomes dull, the lower cutter 53 may be replaced.

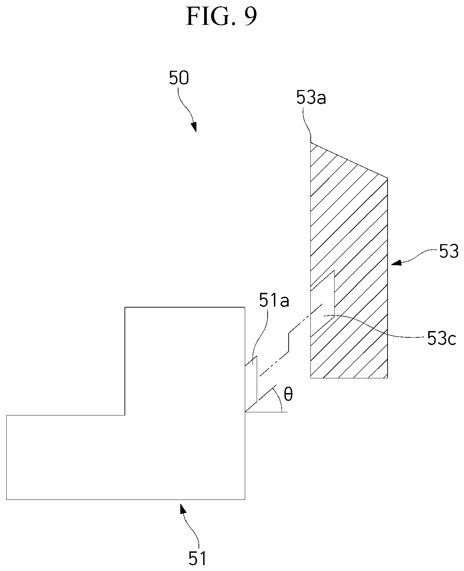

FIG. 9 is a view illustrating the lower cutting unit 50 of the electrode plate cutting machine 30 according to another embodiment of the present disclosure.

As illustrated, a mounting portion 51a may be formed on one side surface of the support body 51, and a locking groove 53c may be provided in the lower cutter 53. The mounting portion 51a is a protrusion protruding from the side surface of the support body 51 and may be inserted into the locking groove 53c. The mounting portion 51a may extend upwardly at a predetermined angle θ. The angle may be 45 degrees.

The locking groove 53c is a fitting groove corresponding to the mounting portion 51a and may accommodate the mounting portion 51a. As the mounting portion 51a is fitted into the locking groove 53c, the lower cutter 53 may be coupled to the support body 51. In addition, when the lower cutter 53 is held and lifted, the lower cutter 53 may be separated from the support body 51. In this way, since the lower cutter is easily coupled to and separated from the support body 51, the lower cutter may be easily replaced.

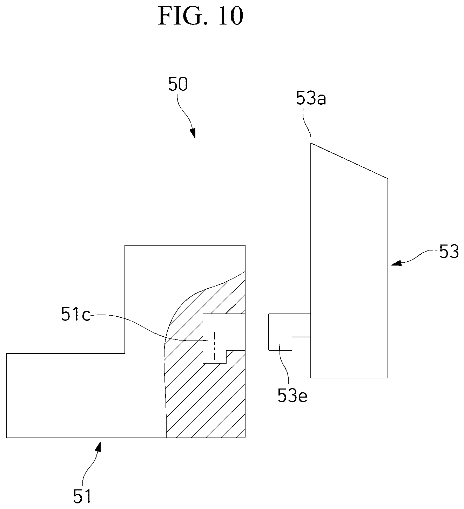

FIG. 10 is a view illustrating the lower cutter unit 50 of the electrode plate cutting machine 30 according to still another embodiment of the present disclosure.

As illustrated in FIG. 10, a locking groove 51c may be formed in the support body 51. The locking groove 51c is a right-angled type groove and may fixedly accommodate an insert link 53e provided on the lower cutter 53. The insert link 53e is a protrusion provided at one side of the lower cutter 53 and may be insertion-coupled to the locking groove 51c. The insert link 53e may be freely coupled to and separated from the locking groove 51c.

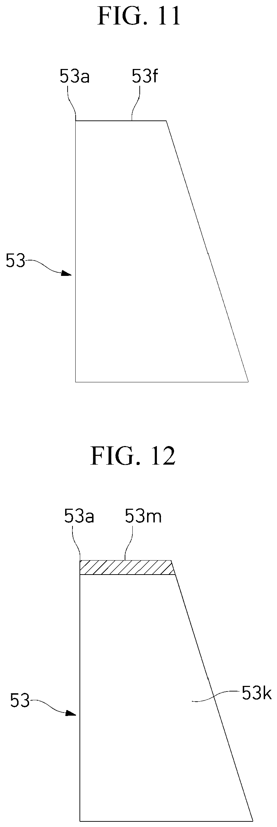

FIGS. 11 to 14 are views illustrating various types of lower cutters 53 applicable to the electrode plate cutting machine 30 according to some embodiments of the present disclosure.

As illustrated in FIG. 11, a horizontal surface portion 53f may be formed on the lower cutter 53. The horizontal surface portion 53f may be a horizontal surface formed on the upper end portion of the lower cutter. The horizontal surface portion 53f may be in close contact with the lower surface of the electrode plate 21. Since the horizontal surface portion 53f is formed, the lower cutter 53 may serve as one stripper. The blade 53a of the lower cutter 53 may be formed at a corner of an end portion of the horizontal surface portion 53f.

The lower cutter 53 illustrated in FIG. 12 may include a lower cutter body 53k and a blade tip 53m. The lower cutter body 53k and the blade tip 53m may be formed of the same material or different materials. The blade tip 53m may have a flat plate shape having a predetermined thickness and may be fixed to an upper end surface of the lower cutter body 53k in an adhesive manner. In addition, the blade 53a may be formed on one end portion of the blade tip 53m. The blade tip 53m may be a cutting member that applies a shear force to the electrode plate 21.

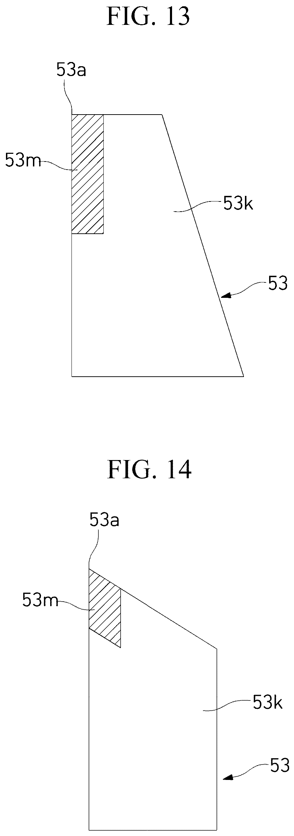

The lower cutter 53 of FIG. 13 may include the lower cutter body 53k and the blade tip 53m in a vertical type. The blade tip 53m may be fixed to an upper end of a side surface of the lower cutter body 53k. The blade tip 53m may be formed of a material that is the same as or different from that of the lower cutter body 53k. The blade tip 53m may be fixed to the lower cutter body 53k in an adhesive manner. The blade 53a may be formed at a corner of an upper end of the blade tip 53m. The blade tip 53m may be a cutting member that applies a shear force to the electrode plate 21.

The lower cutter 53 illustrated in FIG. 14 may include the lower cutter body 53k and the blade tip 53m having a rhombus-shaped cross section. The blade tip 53m may have a substantially rhombus-shaped cross section and may be fixed to an upper end of a side surface of the lower cutter body 53k. The blade tip 53m may be formed of a material that is the same as or different from that of the lower cutter body 53k. The blade tip 53m may be fixed to the lower cutter body 53k in an adhesive manner. In addition, the blade 53a may be formed on an upper end of the blade tip 53m. The blade tip 53m may be a cutting member that applies a shear force to the electrode plate 21.

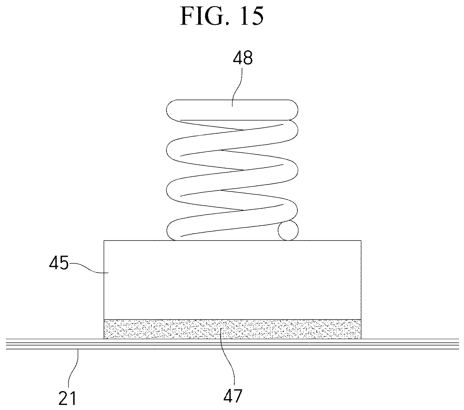

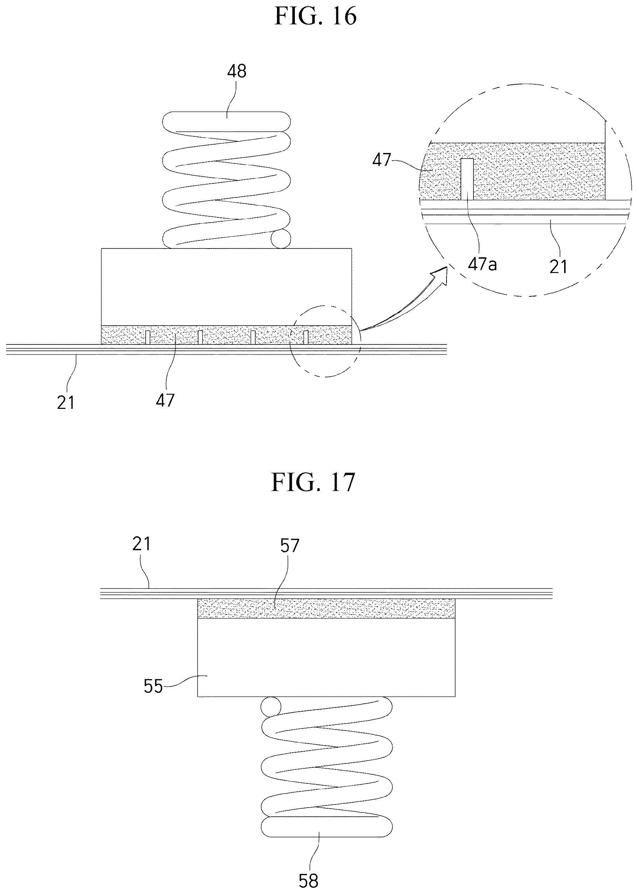

FIGS. 15 and 16 illustrate the upper stripper 45 applicable to the electrode plate cutting machine 30 according to some other embodiments of the present disclosure.

As illustrated, a friction plate 47 may be further mounted on the lower surface of the upper stripper 45. The friction plate 47 may be a member that may be in close contact with the upper surface of the electrode plate 21. The friction plate 47 may be formed of a material that is the same as or different from that of the upper stripper 45. In the case of a different material, it may be steel or urethane rubber having a different hardness from the friction plate 47. The friction plate 47 may prevent the upper stripper 45 from being worn and improve a frictional force against the electrode plate 21. The friction plate 47 may be coupled to the upper stripper 45 in an adhesive manner.

In addition, as illustrated in FIG. 16, a plurality of slits 47a may be formed in a lower surface of the friction plate 47. The slits 47a may be micro-grooves for increasing holding strength of the friction plate 47 with respect to the upper surface of the electrode plate 21. That is, the slits 47a prevent the friction plate 47 from slipping on the electrode plate 21. The slits 47a may extend in a direction orthogonal to the transport direction of the electrode plate 21.

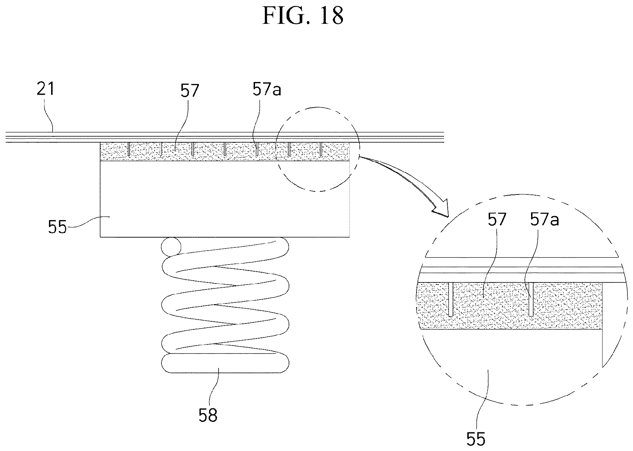

FIGS. 17 and 18 illustrate another example of the lower stripper 55 applicable to the electrode plate cutting machine 30 according to some embodiments of the present disclosure.

Referring to FIG. 17, a friction plate 57 may be fixed to an upper surface of the lower stripper 55. The friction plate 57 may be a member that may be in close contact with the lower surface of the electrode plate 21. The friction plate 57 may be formed of a material that is the same as or different from that of the lower stripper 55. **In** the case of a different material, it may be steel or urethane rubber having a different hardness from the friction plate 57. The friction plate 57 may prevent the lower stripper 55 from being worn and improve a frictional force against the electrode plate 21. The friction plate 57 may be coupled to the lower stripper 55 in an adhesive manner.

In addition, as illustrated in FIG. 18, a plurality of slits 57a may be formed in an upper surface of the friction plate 57. The slits 57a may be micro-grooves for increasing close-contact strength of the friction plate 57 with respect to the lower surface of the electrode plate 21. That is, the slits 47a prevent the friction plate 57 from slipping on the electrode plate 21. The slits 57a may extend in a direction orthogonal to the transport direction of the electrode plate 21.

As described herein, the electrode plate cutting machine 30 according to the present embodiment has a configuration that accurately cuts the electrode plate 21 and effectively suppresses the movement of the electrode plate that may occur during the herein process. Through the cooperative operation of the upper cutting unit 40 and the lower cutting unit 50, the electrode plate 21 may be cut in a stably fixed state. Such structural characteristics can minimize deintercalation of the active material from the substrate of the electrode plate 21 during the cutting operation and improve the efficiency and quality of the secondary battery manufacturing process.

According to an electrode plate cutting machine for a secondary battery and a secondary battery manufacturing apparatus having the electrode plate cutting machine according to the present disclosure, by suppressing movement of an electrode plate while the electrode plate is cut, it is possible to prevent deintercalation of an active material from a substrate while cutting and omit a post-processing process for collecting foreign substances after cutting.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. An electrode plate cutting machine for a secondary battery, comprising:
an upper cutting unit having
an upper cutter configured to be installed above a transport path of an electrode plate transported along the transport path, and
an upper stripper disposed at a side portion of the upper cutter, wherein the upper stripper is configured to press the electrode plate downwardly and support the electrode plate when cutting the electrode plate; and
a lower cutting unit having
a lower cutter configured to be installed below the upper cutting unit with the electrode plate interposed therebetween, wherein the lower cutter is configured to cut the electrode plate through cross movement with the upper cutter, and
a lower stripper positioned at a side portion of the lower cutter, wherein the lower stripper is configured to support the electrode plate upwardly toward the upper cutter when cutting the electrode plate.

2. The electrode plate cutting machine as claimed in claim 1, wherein the upper cutting unit further comprises a support body configured to fix the upper cutter, and
an elastic supporter provided on the support body, the elastic supporter configured to elastically support the upper stripper downwardly.

3. The electrode plate cutting machine as claimed in claim 1 or 2, wherein the lower cutting unit further comprises a support body configured to support the lower cutter, and
an elastic supporter installed on the support body of the lower cutting unit, the elastic supporter of the lower cutting unit configured to elastically support the lower stripper upwardly.

4. The electrode plate cutting machine as claimed in claim 3, wherein a stripper guide is installed on the support body of the lower cutting unit, the stripper guide configured to support the lower stripper so as to prevent the lower stripper from moving laterally when cutting the electrode plate.

5. The electrode plate cutting machine as claimed in claim 3 or 4, wherein the lower cutter is insertion-coupled to the support body of the lower cutting unit.

6. The electrode plate cutting machine as claimed in any preceding claim, wherein a horizontal surface portion is formed on an upper surface of the lower cutter, wherein the horizontal surface portion is configured to be in surface contact with the electrode plate when cutting the electrode plate.

7. The electrode plate cutting machine as claimed in any preceding claim, wherein the lower cutter comprises a lower cutter body, and a blade tip coupled to the lower cutter body so as to apply a shear force to the electrode plate.

8. The electrode plate cutting machine as claimed in any preceding claim, wherein a friction plate is mounted on an upper surface of the lower stripper, wherein the friction plate is configured to be in contact with a lower surface of the electrode plate.

9. The electrode plate cutting machine as claimed in any one of claims 2 to 8, wherein a stripper guide for supporting the upper stripper is provided on the support body of the upper cutting unit, wherein the stripper guide for supporting the upper stripper is configured to prevent the upper stripper from moving laterally when cutting the electrode plate.

10. The electrode plate cutting machine as claimed in any preceding claim, wherein a friction plate is mounted on a lower surface of the upper stripper, and wherein the friction plate mounted on the lower surface of the upper stripper is configured to be in contact with the electrode plate.

11. A secondary battery manufacturing apparatus comprising:
a plurality of transport rollers configured to transport an electrode plate, which is a processing target, along a transport path;
a winding roll configured to wind the electrode plate that has passed the transport roller;
a motor configured to rotate the winding roll;
the electrode plate cutting machine according to any preceding claim; and
a driving unit configured to move the upper cutting unit upwardly and downwardly.
